# EUROPÄISCHE PATENTANMELDUNG

(11) **EP 1 422 119 A1**
(43) Veröffentlichungstag der Anmeldung: **26.05.2004**
(21) Anmeldenummer: 03450247.6
(22) Anmeldetag: 05.11.2003
(51) Int. Cl.: B61F 9/00, B61K 9/12, B60T 7/12, B61L 23/04

(54) **Induktiver Entgleisungsdetektor**

(30) Priorität: 20.11.2002 AT 17472002
(71) Anmelder: Siemens SGP Verkehrstechnik, 1110 Wien (AT)
(72) Erfinder: Becher, Klemens Martin, 8010 Graz (AT); Isopp, Gottfried, 8045 Graz (AT)
(74) Vertreter: Patentanwaltskanzlei Matschnig

(57) **Zusammenfassung**

Verfahren und Vorrichtung zur Erkennung einer Entgleisung und/ oder des Verschleißes eines Rades (RAD) eines Schienenfahrzeuges, wobei mittels zumindest eines, in einem vorgebbaren vertikalen Abstand über einer Schiene (SCH), auf welcher das Rad (RAD) im Normalbetriebszustand abrollt, an dem Schienenfahrzeug angeordneten Induktionssensors (SEN, SE1, SE2, SE3, SE4) der vertikale Abstand zwischen dem Induktionssensor (SEN, SE1, SE2, SE3, SE4) und der Schiene (SCH) überwacht wird, wobei einem Unterschreiten und/oder Überschreiten eines vorgebbaren Sollabstandes ein entgleister oder fehlerhafter Zustand des Rades (RAD) zugeordnet ist, wobei bei Unter- und/oder Überschreiten des Sollabstandes ein entsprechendes Hinweissignal (HIN) erzeugt und/oder eine Notbremsung eingeleitet wird.

## Beschreibung

Die Erfindung betrifft ein Verfahren zur Erkennung einer Entgleisung und/oder des Verschleißes eines Rades eines Schienenfahrzeuges.

Weiters betrifft die Erfindung eine Vorrichtung zur Erkennung einer Entgleisung und/oder des Verschleißes eines Rades eines Schienenfahrzeuges.

Unter entgleisten Zuständen werden in diesem Dokument auch vorkritische Zustände, die im wesentlichen unmittelbar einem Entgleisen eines Rades oder Radsatzes vorhergehen, wie das Aufklettern eines Spurkranzes, und lokale Entgleisungszustände, das sind Zustände, die einem Entgleisen eines oder mehrerer Räder/Radsätze eines Schienenfahrzeuges entsprechen, verstanden.

Bevor es zu einem vollständigen Entgleisen eines Schienenfahrzeuges bzw. eines Schienenfahrzeugverbandes kommt, treten zumeist die oben erwähnten, lokalen bzw. vorkritischen Entgleisungszustände auf, welche durch Änderungen des Rad-Schienekontaktes charakterisiert sind. Lokale Entgleisungszustände, die zwar ursächlich für ein vollständiges Entgleisen des Schienenfahrzeuges sind, aber noch keinem vollständigen Entgleisen des Schienenfahrzeuges bzw. Schienenfahrzeugverbandes entsprechen, können beispielsweise ein aus der Spur Springen eines Rades bzw. Radsatzes des Schienenfahrzeuges sein, sodass einige Radsätze nicht mehr auf Geleisen laufen. Zu einem späteren Zeitpunkt kann es dann, beispielsweise bei Überfahren einer Weiche, zu einer vollständigen Entgleisung kommen. Ein vorkritischer Entgleisungszustand kann beispielsweise ein Aufklettern des Spurkranzes eines Rades an den Geleisen darstellen, sodass ein korrekter Rad-Schienekontakt nicht mehr gewährleistet ist.

In Zusammenhang mit der Erkennung von entgleisten Zuständen ist beispielsweise die EP 0 734 925 bekannt geworden. Dieses Dokument offenbart einen Entgleisungsdetektor, der mit einem Notbremsventil in Form eines Notbremsblockes vereint ist. Der Entgleisungsdetektor ist als Schocksensor ausgebildet und weist einen Gewichtskörper auf, der mittels einer Feder in Richtung des Notbremsventils vorgespannt ist. Bei einer Entgleisung wird eine Hauptluftleitung, über welche die Bremsen betätigbar sind, entlüftet und dadurch eine Notbremsung eingeleitet. Das Reaktionsvermögen des Entgleisungsdetektors ist durch die Masse des Gewichtskörpers und dessen Federverspannung bestimmt. Nachteilig an diesem Sensor ist, dass er nicht zwischen Schäden der Strecke und einer tatsächlichen Entgleisungssituation unterscheiden kann, wodurch es zu ungewollten Auslösungen von Notbremsung kommen kann. Ein weiterer Nachteil der bekannten Lösung besteht darin, dass sie bei einer "festen Fahrbahn", das ist der Fall, wenn kein "beschwelltes Gleis" vorliegt bzw. bei NichtVorhandensein einer Hauptluftleitung nicht funktioniert.

Es ist daher eine Aufgabe der Erfindung einen Weg zu schaffen, der es ermöglicht, eine Entgleisung bzw. einen defekten Radzustand auf einfache Weise und mit einer hohen Erkennungswahrscheinlichkeit zu detektieren, um geeignete Gegenmaßnahmen, wie Verringerung der Fahrtgeschwindigkeit oder Einleitung einer Notbremsung, rechtzeitig veranlassen zu können.

Diese Aufgabe wird mit einem Verfahren der eingangs genannten Art erfindungsgemäß dadurch gelöst, dass mittels zumindest eines, in einem vorgebbaren vertikalen Abstand über einer Schiene, auf welcher das Rad im Normalbetriebszustand abrollt, an dem Schienenfahrzeug angeordneten Induktionssensors der vertikale Abstand zwischen dem Induktionssensor und der Schiene überwacht wird, wobei einem Unterschreiten und/ oder Überschreiten eines vorgebbaren Sollabstandes ein entgleister oder fehlerhafter Zustand des Rades zugeordnet ist, wobei bei Unter- und/oder Überschreiten des Sollabstandes ein entsprechendes Hinweissignal erzeugt und/oder eine Notbremsung eingeleitet wird.

Es ist ein Verdienst der Erfindung, auf einfache und zuverlässige Weise eine Entgleisung bzw. einen Radschaden, insbesondere ein zu stark abgefahrenes Rad, erkennen zu können. Bei der erfindungsgemäßen Lösung führt das Verlassen eines vordefinierten Messbereichs durch einen metallischen Körper - der Schiene - zu einer Auslösung eines Hinweissignals an eine Zugsteuerung. Mit anderen Worten wird bei Über- oder Unterschreitung eines vorgebbaren Vertikalabstandes zwischen der Schiene und dem Induktionssensor von der zentralen Zugsteuerung bzw. einer Auswerteeinheit ein entgleister oder ein defekter Radzustand diagnostiziert.

Die Funktionsweise der im Rahmen der Erfindung verwendeten Sensoren beruht auf dem Induktionsprinzip. Derartige Sensoren sind in großer Zahl bekannt geworden. Eine gebräuchliche Methode zur Realisierung eines induktiven Sensor zur Abstandsbestimmung nutzt beispielsweise den physikalischen Effekt der Güteänderung eines Resonanzschwingkreises. Derartige Induktionssensoren enthalten üblicherweise einen Oszillator, Gleichrichtersiebung, Kippverstärker, eine Endstufe und Schutzbeschaltungen. Der Oszillator, bestehend aus einem LC-Schwingkreis, erzeugt ein elektro-magnetisches Streufeld. Das Streufeld bildet über der aktiven Fläche des Induktionssensors einen räumlich begrenzten Bereich, der im Folgenden als aktive Zone bezeichnet wird.

Befindet sich ein elektrisch leitfähiges Material in der aktiven Zone, so wird dem Oszillator durch Wirbelströme Energie entzogen. Dadurch können die Schwingungen auch so weit gedämpft werden, dass sie ganz oder weitgehend aussetzen. Der Oszillator ist gedämpft. Wird das leitende Material aus der aktiven Zone entfernt, kann der Oszillator wieder mit voller Amplitude schwingen. Die Zustände: Oszillator schwingt ungedämpft (kein Gegenstand in der aktiven Zone) und Oszillator schwingt nicht oder gedämpft (Gegenstand in der aktiven Zone) können elektronisch ausgewertet. So kann beispielsweise anhand unterschiedlicher Amplituden des Oszillators die Eindringtiefe eines Gegenstandes aus elektrisch leitfähigen Materials in die aktive Zone und somit der Abstand zwischen dem Sensor und dem Gegenstand ermittelt werden.

Bevorzugterweise ist der Induktionssensor in Fahrtrichtung des Schienenfahrzeuges vor oder hinter der Lauffläche des Rades - im sogenannten Radschatten - angeordnet.

In einer ersten Variante der Erfindung erzeugt der Induktionssensor ein analoges Ausgangssignal, wobei einzelnen Signalwerten je ein Abstand zwischen dem Sensor und der Schiene entspricht.

In einer zweiten Variante der Erfindung erzeugt der Induktionssensor ein digitales Ausgangssignal.

Günstigerweise kann sowohl einem entgleisten Zustand als auch einem stark abgenutzten Zustand des Rades, welcher durch einen verringerten Raddurchmesser charakterisiert ist, je ein Schwellwert des digitalen und/oder analogen Signals zugeordnet sein.

Weiters kann einem auf den Schienenkopf aufgekletterten Zustand eines Spurkranzes des Rades ein Schwellwert des analogen Signals zugeordnet sein.

Weitere Vorteile lassen sich dadurch erzielen, dass zur Beurteilung, ob ein entgleister Zustand vorliegt, die in einem Zeitfenster vorgebbarer Länge liegenden Signalwerte betrachtet werden, wobei bei Auftreten eines einer Entgleisung entsprechenden Signals überprüft wird, ob es sich hierbei um ein innerhalb des Zeitfensters konstantes oder um ein vorübergehend auftretendes Signal handelt. Auf diese Weise kann vermieden werden, dass durch singuläre Störungen auf der Schiene, wie sie beispielsweise durch eine Weiche, eine Schienenkreuzung, etc. bedingt sein können, als Entgleisungszustände detektiert werden.

Zur Durchführung des erfindungsgemäßen Verfahrens eignet sich insbesondere eine Vorrichtung der eingangs genannten Art, bei welcher an dem Schienenfahrzeug über einer Schiene, auf welcher das Rad im Normalbetriebszustand abrollt, ein Induktionssensor angeordnet ist, der dazu eingerichtet ist, zumindest ein analoges oder digitales Ausgangssignal zu erzeugen und an eine Auswerteinheit zu übermitteln, welche dazu eingerichtet ist, anhand der empfangenen Signale zu überprüfen, ob ein Sollabstand zwischen dem Induktionssensor und der Schiene über oder unterschritten wird, und einem Unterschreiten und/oder Überschreiten des Sollabstandes einen entgleisten oder fehlerhafter Zustand des Rades zuzuordnen, sowie ein entsprechendes Hinweissignal zu erzeugen und/oder eine Notbremsung einzuleiten.

Vorteilhafterweise ist der Induktionssensor in Fahrtrichtung des Schienenfahrzeuges vor oder hinter der Lauffläche des Rades angeordnet.

Weiters kann sowohl einem entgleisten Zustand als auch einem stark abgenutzten Zustand des Rades, welcher durch einen verringerten Raddurchmesser charakterisiert ist, je ein Schwellwert des digitalen und/ oder analogen Signals zugeordnet sein.

Darüber hinaus kann einem auf den Schienenkopf aufgekletterten Zustand eines Spurkranzes des Rades ein Schwellwert des analogen Signals zugeordnet sein.

Die Auswerteeinheit kann dazu eingerichtet sein, zur Beurteilung, ob ein entgleister Zustand vorliegt, die in einem Zeitfenster vorgebbarer Länge liegenden Signalwerte heranzuziehen, wobei die Auswerteeinheit weiters dazu eingerichtet ist, bei Auftreten eines einer Entgleisung entsprechenden Signals zu überprüfen, ob es sich hierbei um ein innerhalb des Zeitfensters konstantes oder um ein vorübergehend auftretendes Signal handelt.

Weitere Vorteile lassen sich dadurch erzielen, dass der Induktionssensor auf einem in Fahrtrichtung vor oder hinter die Lauffläche des Rades ragenden Arm einer mit einem Achslagergehäuse des Rades verbundenen Konsole angeordnet ist.

Die Erfindung samt weiterer Vorteile wird im Folgenden anhand einiger nicht einschränkender Ausführungsbeispiele näher erläutert, welche in der Zeichnung dargestellt sind. In dieser zeigen:
Fig. 1 eine Seitenansicht eines Rades eines Schienenfahrzeuges mit einer erfindungsgemäßen Vorrichtung zur Entgleisungsdetektion;

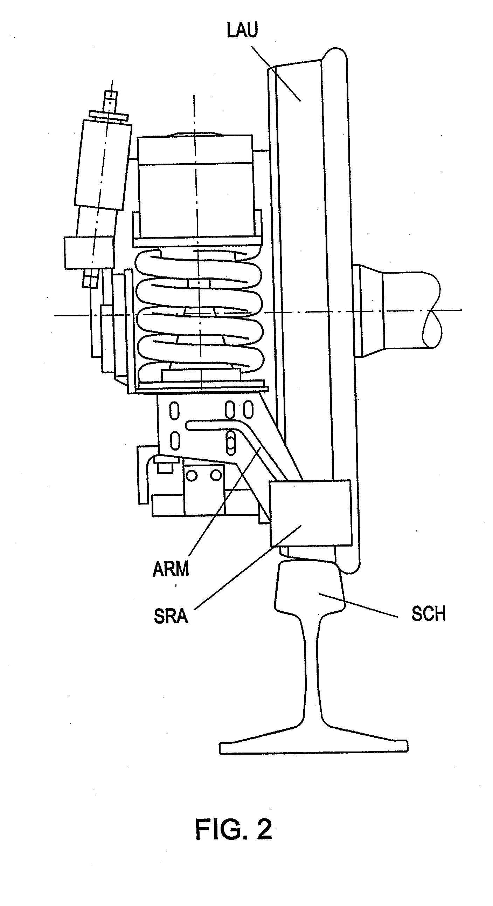

Fig. 2 eine Vorderansicht des Rades und der Vorrichtung zur Entgleisungsdetektion aus Fig.1;

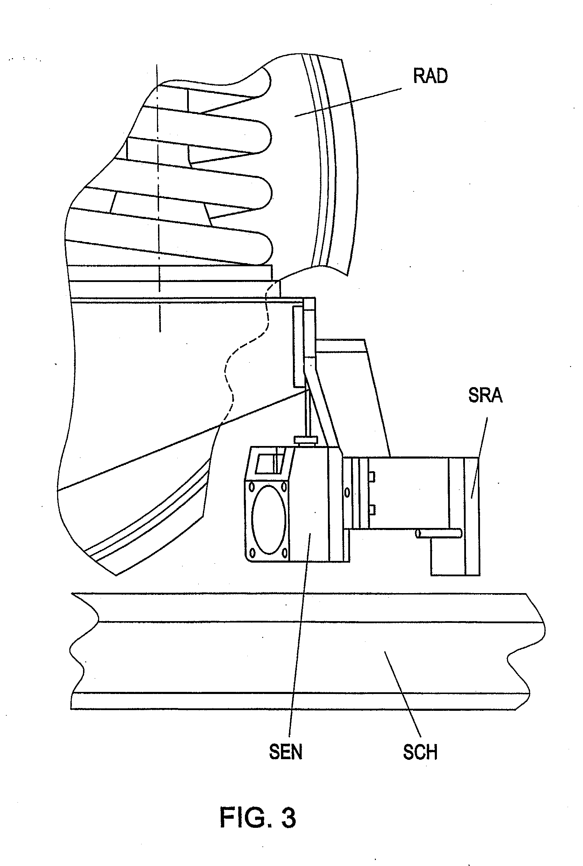

Fig. 3 eine Detailansicht des Bereiches II aus Fig. 1;
Fig. 4 ein Blockdiagramm einer erfindungsgemäßen Vorrichtung;
Fig. 5 ein Diagramm eines Ausgangssignals eines analogen Induktionssensors der erfindungsgemäßen Vorrichtung aus Fig. 4 und
Fig. 6 ein Diagramm eines Ausgangssignal eines digitalen Induktionssensors der erfindungsgemäßen Vorrichtung aus Fig. 4.

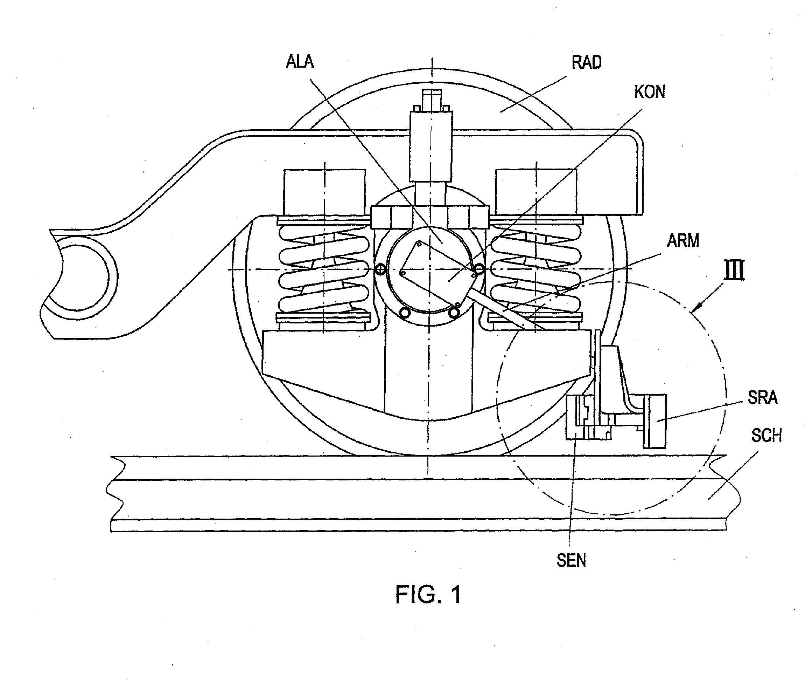

Gemäß Fig. 1 weist eine erfindungsgemäße Vorrichtung zur Detektion entgleister Zustände bzw. von Radschäden einen über einer Schiene SCH angeordneten Induktionssensor SEN auf. Der Sensor SEN ist hierbei so angeordnet, dass die Schiene SCH in seiner aktive Zone, d. h. in seinem Detektionsbereich, liegt. Mithilfe der erfindungsgemäßen Vorrichtung wird der Abstand Schiene-Induktionssensor gemessen. Vorzugsweise ist an allen Rädern RAD eines Drehgestells ein derartiger Induktionssensor SEN angeordnet.

Die Induktionssensoren SEN können über je eine Konsole KON, die an den Achslager ALA oder im Bereich der Achslager ALA angeordnet ist, mit dem Schienenfahrzeug verbunden sein. Die Induktionssensoren SEN können hierbei auf einem von der jeweils zugeordneten Konsole KON wegragenden Haltearm ARM so angeordnet sein, dass sie unmittelbar vor oder hinter der Lauffläche LAU eines Rades RAD angeordnet sind.

Ein vor der Lauffläche LAU eines Rades RAD angeordneter Induktionssensor SEN kann durch einen Schienenräumer SRA, der vor dem Sensor SEN an dem Haltearm ARM angeordnet sein kann, geschützt werden. Auf diese Weise können auf der Schiene SCH liegende Hindernisse aus dem Weg geräumt werden.

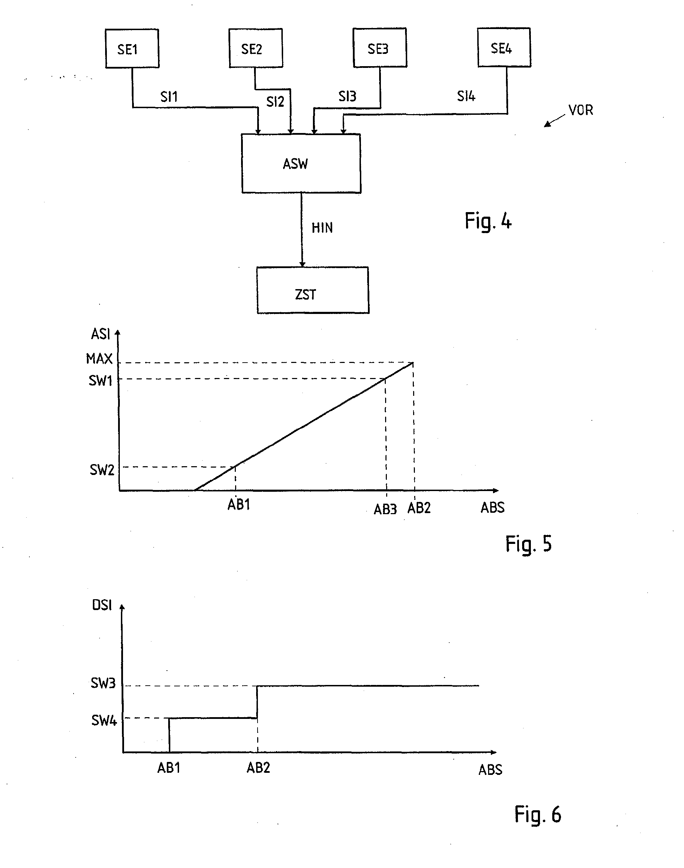

Gemäß Fig. 4 werden die von den Induktionssensoren SE1, SE2, SE3, SE4 erzeugten Signale SI1, SI2, SI3, SI4 an eine Auswerteeinheit ASW übermittelt. Die Übertragung der Signale SI1, SI2, SI3, SI4 von den Sensoren SE1, SE2, SE3, SE4 an die Auswerteeinheit ASW kann mittels Draht oder drahtlos erfolgen. Die Auswerteeinheit ASW, beispielsweise ein entsprechend programmierter Mikro- oder Signalprozessor ist dazu eingerichtet, zu überprüfen, ob das von einem Induktionssensor SE1, SE2, SE3, SE4 erzeugte Ausgangssignal SI1, SI2, SI3, SI4 über oder unter einem vorgebbaren Schwellwert SW1, SW2, SW3 liegt (Fig. 5, 6). Wird die Über- oder Unterschreitung eines Schwellwertes SW1, SW2, SW3 detektiert, so kann ein entsprechendes Hinweissignal HIN erzeugt und an eine Zugsteuerung ZST weitergeleitet werden, welche eine Notbremsung oder Verringerung der Fahrtgeschwindigkeit veranlassen kann.

Handelt es sich bei dem Induktionssensor SEN um einen analogen Sensor so ändert sich gemäß Fig. 4 das Ausgangssignal ASI - die Ausgangsspannung oder der Ausgangsstrom - mit dem Abstand zur Schiene SCH. Somit können einzelnen Werten des analogen Ausgangssignals ASI Abstände AB1, AB2, AB3 zwischen Schiene SCH und Sensor zugeordnet werden. Der Abstand AB1 entspricht hierbei der Montagehöhe des Induktionssensors SEN über dem Schienenkopf.

Durch die Einführung von Schwellwerten SW1, SW2, MAX für die Ausgangssignalwerte ASI können unterschiedliche vorkritische entgleiste Zustände detektiert werden. Durch die eindeutige Zuordnung von Abständen zwischen Schiene und Sensor zu Signalwerten wird auch eine qualitative Beurteilung des Radzustandes ermöglicht.

Wird beispielsweise während einer Fahrt über einen vorgebbaren Zeitraum hinweg das Unterschreiten eines Schwellwertes SW2 durch das analoge Ausgangssignal ASI eines dem Rad RAD zugeordneten Induktionssensors SEN gemessen, so kann auf eine Verringerung des Durchmessers dieses Rades RAD geschlossen werden. Anhand der Werte des Ausgangssignals kann dann von der Auswerteeinheit ASW ermittelt werden, wie groß die Verringerung des Raddurchmessers ist. Somit kann durch die erfindungsgemäße Lösung der Radverschleiß auf einfache Weise ermittelt werden.

Ein weiterer Vorteil der erfindungsgemäßen Lösung besteht darin, dass auch in einem ruhenden Zustand des Schienenfahrzeuges Raddefekte detektiert werden können, da auch bei einem ruhenden Zug eine Unterschreitung eines Mindestabstandes zwischen Schiene und Sensor erkannt werden kann. Eine Unterschreitung des Mindestabstandes bei einem ruhenden Schienenfahrzeug kann beispielsweise durch eine gleichmäßige Verringerung des Raddurchmessers oder aber auch durch eine partielle Abflachung des Rades hervorgerufen sein.

Auch das Aufklettern eines Rades kann mit großer Sicherheit erkannt werden. So nimmt beispielsweise bei Aufklettern eines Rades auf einer Seite einer Achse eines Radsatzes der Sensor-Schieneabstand zu, sodass dieser außerhalb des zulässigen Bereiches - Überschreiten des Schwellwertes SW1 - liegt, während auf der anderen Seite der Achse der Sensor-Schieneabstand im zulässigen Bereich liegt.

Bei einer vollständigen Entgleisung verlässt die Schiene SCH die aktive Zone des Induktionssensors, sodass das analoge Ausgangssignal ASI des Sensors SEN seinen Maximalwert MAX erreicht. Wird über einen vorgebbaren Zeitraum hinweg der Maximalwert MAX von der Auswerteeinheit ASW empfangen, so kann eine Notbremsung eingeleitet werden.

Um die Erkennungswahrscheinlichkeit einer vollständigen Entgleisung eines Radsatzes zu erkennen, besteht darin, dass überprüft wird ob an beiden Seiten des Radsatzes das von dem jeweiligen Induktionssensor SEN erzeugte analoge Ausgangssignal ASI seinen Maximalwert MAX annimmt. An dieser Stelle sei darauf hingewiesen, dass die erfindungsgemäße Lösung selbstverständlich sowohl für Radsätze als auch für Losräder geeignet ist.

Handelt es sich bei dem Induktionssensor SEN um einen digitalen Induktionssensor, so bekommt kann man beispielsweise zwei Schwellwerte SW3, SW4 definieren. Die Überschreitung eines oberen Schwellwertes SW3 entspricht hierbei der vollständigen Entgleisung des von dem Sensor überwachten Rades RAD, während die Unterschreitung eines unteren Schwellwertes SW4 durch einen Radverschleiß hervorgerufen wird.

Um eine fälschliche Diagnose einer Entgleisung oder eines Radschadens zu vermeiden, können die analogen und digitalen Ausgangssignale der Induktionssensoren über ein Zeitfenster vorgebbarer Länge betrachtet werden. Tritt beispielsweise ein Signal, welches einem Radschaden oder einem entgleisten Zustand entspricht über ein ganzes Zeitfenster hinweg auf, so kann eine Notbremsung ausgelöst werden. Tritt ein derartiges Signal in dem Zeitfenster hingegen nur vorübergehend auf, so kann dieses Signal verworfen werden.

## Patentansprüche

1. Verfahren zur Erkennung einer Entgleisung und/ oder des Verschleißes eines Rades (RAD) eines Schienenfahrzeuges, **dadurch gekennzeichnet, dass** mittels zumindest eines, in einem vorgebbaren vertikalen Abstand über einer Schiene (SCH), auf welcher das Rad (RAD) im Normalbetriebszustand abrollt, an dem Schienenfahrzeug angeordneten Induktionssensors (SEN, SE1, SE2, SE3, SE4) der vertikale Abstand zwischen dem Induktionssensor (SEN, SE1, SE2, SE3, SE4) und der Schiene (SCH) überwacht wird, wobei einem Unterschreiten und/oder Überschreiten eines vorgebbaren Sollabstandes ein entgleister oder fehlerhafter Zustand des Rades (RAD) zugeordnet ist, wobei bei Unter- und/oder Überschreiten des Sollabstandes ein entsprechendes Hinweissignal (HIN) erzeugt und/oder eine Notbremsung eingeleitet wird.

2. Verfahren nach Anspruch 1, **dadurch gekennzeichnet, dass** der Induktionssensor (SEN, SE1, SE2, SE3, SE4) in Fahrtrichtung des Schienenfahrzeuges vor oder hinter der Lauffläche (LAUF) des Rades (RAD) angeordnet ist.

3. Verfahren nach Anspruch 1 oder 2, **dadurch gekennzeichnet, dass** der Induktionssensor (SEN, SE1, SE2, SE3, SE4) ein analoges Ausgangssignal (ASI) erzeugt, wobei einzelnen Signalwerten je ein Abstand (AB1, AB2, AB3) zwischen dem Induktionssensor (SEN, SE1, SE2, SE3, SE4) und der Schiene (SCH) entspricht.

4. Verfahren nach Anspruch 1 oder 2, **dadurch gekennzeichnet, dass** der Induktionssensor (SEN, SE1, SE2, SE3, SE4) ein digitales Ausgangssignal (DSI) erzeugt.

5. Verfahren nach Anspruch 2 bis 4, **dadurch gekennzeichnet, dass** einem entgleisten Zustand und/oder einem stark abgenutzten Zustand des Rades (RAD), welcher durch einen verringerten Raddurchmesser charakterisiert ist, je ein Schwellwert (MAX, SW1, SW2, SW3, SW4) des digitalen und/oder analogen Ausgangssignals (ASI, DSI) zugeordnet ist.

6. Verfahren nach Anspruch 3, **dadurch gekennzeichnet, dass** einem auf den Schienenkopf aufgekletterten Zustand eines Spurkranzes des Rades (RAD) ein Schwellwert (SW1) des analogen Signals zugeordnet ist.

7. Verfahren nach einem der Ansprüche 3 bis 6, **dadurch gekennzeichnet, dass** zur Beurteilung, ob ein entgleister Zustand vorliegt, die in einem Zeitfenster vorgebbarer Länge liegenden Signalwerte betrachtet werden, wobei bei Auftreten eines einer Entgleisung entsprechenden Signalwertes überprüft wird, ob es sich hierbei um ein innerhalb des Zeitfensters konstanten oder um einen vorübergehend auftretenden Signalwert handelt.

8. Vorrichtung (VOR) zur Erkennung einer Entgleisung und/oder des Verschleißes eines Rades (RAD) eines Schienenfahrzeuges, **dadurch gekennzeichnet, dass** an dem Schienenfahrzeug über einer Schiene (SCH), auf welcher das Rad (RAD) im Normalbetriebszustand abrollt, ein Induktionssensor (SEN, SE1, SE2, SE3, SE4) angeordnet ist, der dazu eingerichtet ist, zumindest ein analoges oder digitales Ausgangssignal (ASI, DSI, SI1, SI2, SI3, SI4) zu erzeugen und an eine Auswerteinheit (ASW) zu übermitteln, welche dazu eingerichtet ist, anhand der empfangenen Signale (ASI, DSI, SI1, SI2, SI3, SI4) zu überprüfen, ob ein Sollabstand zwischen dem Induktionssensor (SEN, SE1, SE2, SE3, SE4) und der Schiene (SCH) über oder unterschritten wird, und einem Unterschreiten und/oder Überschreiten des Sollabstandes einen entgleisten oder fehlerhafter Zustand des Rades (RAD) zuzuordnen, sowie ein entsprechendes Hinweissignal (HIN) zu erzeugen und/oder eine Notbremsung einzuleiten.

9. Vorrichtung nach Anspruch 8, **dadurch gekennzeichnet, dass** der Induktionssensor (SEN, SE1, SE2, SE3, SE4) in Fahrtrichtung des Schienenfahrzeuges vor oder hinter der Lauffläche des Rades (RAD) angeordnet ist.

10. Vorrichtung nach Anspruch 8 oder 9, **dadurch gekennzeichnet, dass** sowohl einem entgleisten Zustand als auch einem stark abgenutzten Zustand des Rades (RAD), welcher durch einen verringerten Raddurchmesser charakterisiert ist, je ein Schwellwert (SW1, SW2, SW3, SW4) des digitalen und/oder analogen Signals zugeordnet ist.

11. Vorrichtung nach einem der Ansprüche 8 bis 10, **dadurch gekennzeichnet, dass** einem auf den Schienenkopf aufgekletterten Zustand eines Spurkranzes des Rades (RAD) ein Schwellwert (SW1) des analogen Signals (ASI) zugeordnet ist.

12. Vorrichtung nach einem der Ansprüche 8 bis 11, **dadurch gekennzeichnet, dass** die Auswerteeinheit (ASW) dazu eingerichtet ist, zur Beurteilung, ob ein entgleister Zustand vorliegt, die in einem Zeitfenster vorgebbarer Länge liegenden Signalwerte heranzuziehen, wobei die Auswerteeinheit (ASW) weiters dazu eingerichtet ist, bei Auftreten eines einer Entgleisung entsprechenden Signalwertes zu überprüfen, ob es sich hierbei um einen innerhalb des Zeitfensters konstantes oder um einen vorübergehend auftretenden Signalwert handelt.

13. Vorrichtung nach einem der Ansprüche 8 bis 12, **dadurch gekennzeichnet, dass** der Induktionssensor (SEN, SE1, SE2, SE3, SE4) auf einem in Fahrtrichtung vor oder hinter die Lauffläche (LAU) des Rades (RAD) ragenden Arm (ARM) einer mit einem Achslagergehäuse (ALA) des Rades (RAD) verbundenen Konsole (KON) angeordnet ist.
